# EUROPEAN PATENT SPECIFICATION

(11) **EP 4 339 035 B1**
(45) Date of publication and mention of the grant of the patent: **28.01.2026**
(21) Application number: 22196064.4
(22) Date of filing: 16.09.2022
(51) Int. Cl.: B60R 19/34

(54) **CRASH MANAGEMENT SYSTEM FOR A FRONT OR REAR AREA OF A MOTOR VEHICLE**
CRASHMANAGEMENTSYSTEM FÜR EINEN FRONT- ODER HECKBEREICH EINES KRAFTFAHRZEUGS
SYSTÈME D' ABSORPTION DE CHOC POUR L' AVANT OU L' ARRIÈRE D' UN VÉHICULE

(43) Date of publication of application: 20.03.2024
(73) Proprietor: Constellium Singen GmbH, 78224 Singen (DE)
(72) Inventor: JAEKLE, Dominik, 78234 ENGEN (DE); SCHMID, Thomas, 78315 RADOLFZELL (DE); STARK, Sebastian, 78234 ENGEN (DE)
(74) Representative: Constellium - Propriété Industrielle

(56) References cited:
- EP-A1- 3 853 076
- EP-B1- 3 853 076
- DE-U1- 202012 103 728
- US-A1- 2001 024 051
- US-A1- 2021 053 519

## Description

### FIELD OF THE INVENTION

The invention relates to a crash management system for a front or rear area of a motor vehicle which is characterized by a particularly simple adaption of the vertical position of its crossbeam while exhibiting good crash properties.

### BACKGROUND

A crash management system for a front or rear area of a motor vehicle having the features of the preamble of claim 1 is known from the applicant's EP 3 936 391 A1. The known crash management system is characterized by attachment adapters which are connected to its crash boxes and which allow a vertical position of the crossbeam to be adjusted in the vertical direction in a simple manner. To this end, the attachment adapters are extruded components having an extrusion direction running in the vertical direction, the attachment adapters accommodating or surrounding the crossbeam in the transverse direction at its opposite end faces.

Furthermore, a crash management system for a motor vehicle which is also provided with two attachment adapters formed by extruded components is known from DE 20 2012 103728 U1. The attachment adapters have chambers which surround the crossbeam both at its upper side and its underside.

### DESCRIPTION OF THE INVENTION

The crash management system according to the invention for a front or rear area of a motor vehicle, which has the features of claim 1, allows the vertical position of crossbeams which project over the area of the crash boxes laterally, i.e., in the direction of the vehicle exterior, to be adjusted or adapted particularly simply.

Against the background of the explanations above, it is hence provided for the attachment adapter for attaching the crossbeam to the crash box of a crash management system for a front or rear area of a motor vehicle according to the invention and having the features of claim 1 to have an extrusion direction extending in the transverse direction and for the crossbeam to project over the two attachment adapters in the transverse direction Y on opposite sides of the two attachment adapters.

It is an object of the invention to propose a crash management system for a front or rear area of a motor vehicle having a longitudinal direction, a transverse direction running perpendicular to the longitudinal direction, and a vertical direction running perpendicular to the longitudinal direction and the transverse direction, the crash management system comprising a crossbeam extending essentially in the transverse direction, the crossbeam being configured to be attached to a vehicle structure by means of two crash boxes, which are disposed at a distance from each other, and an attachment adapter for attaching the crossbeam to the crash box, the attachment adapter being associated with one crash box and the crossbeam and connected to the crash box, the attachment adapter being an extruded component, and the crossbeam projecting over the cross section of the crash box on one side on an end face of the crash box facing the crossbeam in the vertical direction, characterized in that the attachment adapter has an extrusion direction extending in the transverse direction and that the crossbeam projects over the two attachment adapters in the transverse direction on opposite sides of the two attachment adapters facing away from each other.

Advantageous embodiments of the crash management system for a front or rear area of a motor vehicle according to the invention are indicated in the dependent claims.

According to an advantageous embodiment, the attachment adapter has exactly one first stop area on the side facing away from the crash box, the first stop area at least partially covering the crossbeam in the longitudinal direction and the crossbeam being in contact with the first stop area in the vertical direction, so as to clearly define the position of the crossbeam in the vertical direction on the attachment adapter. The use of only one stop area makes a simple installation of the crossbeam possible irrespective of the structural tolerances of the crossbeam in the vertical direction, during which the desired surface for placing a weld is created by bringing the crossbeam into contact with the first stop area.

According to an embodiment based thereon, the first stop area has, in the cross section, at least one chamber having a closed cross section to achieve a high stiffness of the first stop area in connection with a relatively low weight of the attachment adapter. This chamber extends in the transverse direction of the crossbeam and in the vertical direction above and/or below the crossbeam, preferably in an area of overlap with the cross section of the crash box. According to an embodiment, the attachment adapter has an adapter plate which is in contact with an end face of the crash box, the adapter plate protruding over the cross section of the crash box in the vertical direction on both sides, to provide as large a connection surface as possible when forming welds between the attachment adapter and the crash box.

According to another embodiment, the attachment adapter has exactly one second stop area on the side facing the crash box, the second stop area being in contact with the crash box in the vertical direction, so as to vertically position the attachment adapter on the crash box. In this case, too, the second stop area can have at least one chamber, preferably a triangular chamber, which is closed in cross section, as in the case of the first stop area.

A large-area connection between the attachment adapter and the crash box for the safe transmission of forces occurring in the event of a crash becomes possible if the attachment adapter laterally projects over the cross section of the crash box on at least one side, preferably on both sides, when viewed in the transverse direction.

The connection between the attachment adapter, the crossbeam, and the crash box is a welded connection, an adhesive connection, a screwed connection, or a riveted connection. Preferably, the elements mentioned are connected by a welded connection. To this end, the attachment adapter, the crossbeam, and the crash box are made of aluminum or an aluminum alloy. The welded connection basically enables a homogenous or even introduction of forces between the elements mentioned while in particular avoiding stress peaks or forces leading to a destruction of the components mentioned in the connection area in the event of a crash.

According to a preferred embodiment, said welded connection has first welds, which run in the transverse direction, and/or second welds, which run in the longitudinal direction, and/or third welds, which run in the vertical direction.

According to another preferred embodiment, the crossbeam is an extruded component.

Other advantages, features, and details of the invention are apparent from the following description of preferred embodiments of the invention and from the drawings.

### DESCRIPTION OF THE DRAWINGS

- Fig. 1: shows a perspective view of a crash management system for a front or rear area of a motor vehicle,
- Fig. 2: shows a section of the crash management system of Fig. 1 in a modified embodiment; and
- Fig. 3: shows a simplified illustration of a further modified arrangement and configuration of an attachment adapter for a crash management system.

### DETAILED DESCRIPTION OF THE INVENTION

Identical elements and elements having the same function are provided with the same reference signs in the figures.

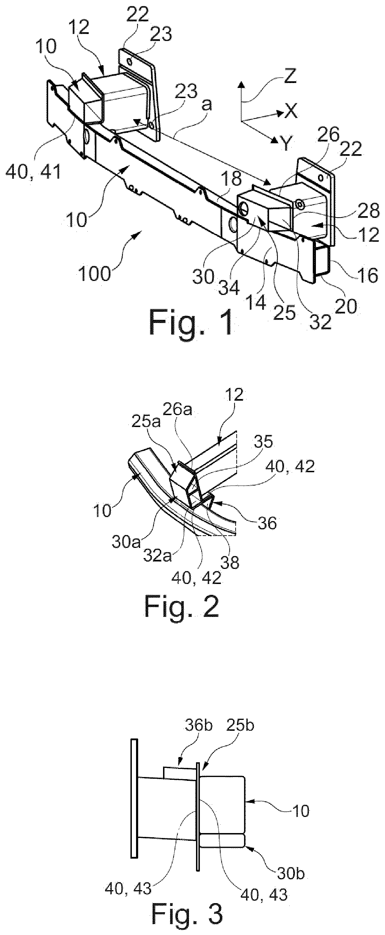

Fig. 1 shows a crash management system 100 for a front or rear area of a motor vehicle (not shown). Crash management system 100 and the vehicle have a longitudinal direction X, a transverse direction Y, which is perpendicular to longitudinal direction X, and a vertical direction Z, which is perpendicular to longitudinal direction X and transverse direction Y.

Furthermore, crash management system 100 comprises a crossbeam 10, which is preferably made of aluminum or an aluminum alloy and is an extruded component. Of course, forming or producing crossbeam 10 from multiple interconnected components is also well within the scope of the invention.

Crossbeam 10 can be connected to a vehicle structure (not shown) of the motor vehicle, in particular in the area of its longitudinal beams, by means of two crash boxes 12, which are visible in Fig. 1. Crash boxes 12 have a distance a from each other in transverse direction Y. Furthermore, Fig. 1 shows that crossbeam 10 also essentially extends in transverse direction Y, crossbeam 10 being either straight or at least partially curved, as is illustrated in Fig. 1.

Furthermore, Fig. 1 shows that crossbeam 10, which has a closed chamber as an example, has a front flange 14 on the side facing away from crash box 12 and a rear flange 16 on the side facing crash box 12. Two transverse walls 18 and 20 connecting front flange 14 and rear flange 16 complete the closed cross section of crossbeam 10.

As an example, crash box 12 has an approximately rectangular cross section and is connected, in particular welded, to an adapter plate 22 on the side facing away from crossbeam 10. For example, adapter plate 22 has openings 23, via which adapter plate 22 and therefore crash box 12 can be screwed to the vehicle structure (longitudinal beam). Crash box 12 is preferably also made of aluminum or an aluminum alloy.

As can be seen from the figures, crossbeam 10 projects over crash box 12 in the area of the underside (alternatively the topside) of crossbeam 10, i.e., in vertical direction Z. Crossbeam 10 is attached to respective crash box 12 via a respective attachment adapter 25. Attachment adapter 25 is made of aluminum or an aluminum alloy and is an extruded component with an extrusion direction running in transverse direction Y. Attachment adapter 25 has an adapter plate 26 on the side facing crash box 12, adapter plate 26 being in flush contact with an end face 28 of crash box 12, adapter plate 26 projecting over the cross section of crash box 12 at least in vertical direction Z and preferably also in transverse direction Y on both sides.

A first stop area 30 is monolithically formed on the side of attachment adapter 25 or adapter plate 26 facing crossbeam 10. In the illustrative example shown in Fig. 1, first stop area 30 is in the shape of a chamber 32, which has an approximately rectangular cross section; upper transverse wall 18 of crossbeam 10 is in contact with lower surface 34 of chamber 32, which faces crossbeam 10, so as to define the position of crossbeam 10 in vertical direction Z.

In addition to first stop area 30a, which has an another chamber 35, which is approximately triangular in cross section, in addition to chamber 32a, attachment adapter 25a has a second stop area 36 in the illustrative example shown in Fig. 2. Second stop area 36 extends on the side of adapter plate 26a facing crash box 12 and has a chamber 38, which is approximately triangular in cross section, as an example.

Additionally, it is noted that multiple chambers of this or a similar kind can be provided instead of a single chamber 38 or that walls divide chamber 38 into multiple areas, which preferably each have a closed cross section.

As can further be seen from Figs. 1 and 2, attachment adapter 25, 25a or adapter plate 26, 26a projects over the cross section of crash box 12 at end face 28 in transverse direction Y on both sides.

The connection between crossbeam 10, attachment adapter 25, 25a, and crash box 12 is formed by a welded connection 40. Welded connection 40 comprises first welds 41, which are visible in the figures and which are formed in transverse direction Y between first stop area 30, 30a and front flange 14 of crossbeam 10 and between adapter plate 26, 26a and crash box 12. Furthermore, welded connection 40 comprises second welds 42, which run in longitudinal direction X. Second welds 42 are formed between first stop area 30, 30a and upper transverse wall 18 of crossbeam 10 (Fig. 2) and between second stop area 36 and crash box 12. Finally, welded connection 40 can comprise third welds 43, which run in vertical direction Z. Third welds 43 are formed between end face 28 of crash box 12 and the areas of adapter plate 26, 26a laterally projecting over the cross section of crash box 12 in transverse direction Y.

Crash management system 100 described above can be altered or modified in various ways without departing from the invention. For instance, it is in particular not necessary for first stop area 30, 30a or second stop area 36 to each form at least one chamber 32, 32a, 35, 38. Instead, the cross section of first stop area 30b and/or second area 36a can also be formed by an area of attachment adapter 25b, which consists of solid material in cross section, in the form of a web or a rib, as is illustrated in Fig. 3.

### Reference signs

- 10: crossbeam
- 12: crash box
- 14: front flange
- 16: rear flange
- 18: transverse wall
- 20: transverse wall
- 22: adapter plate
- 23: opening
- 25,a,b: attachment adapter
- 26,a: adapter plate
- 28: end face
- 30,a,b: first stop area
- 32,a: chamber
- 34: surface
- 35: chamber
- 36,b: second stop area
- 38: chamber
- 40: welded connection
- 41: first weld
- 42: second weld
- 43: third weld

- 100: crash management system

- a: distance

- X: longitudinal direction
- Y: transverse direction
- Z: vertical direction

## Claims

1. A crash management system (100) for a front or rear area of a motor vehicle having a longitudinal direction (X), a transverse direction (Y) running perpendicular to the longitudinal direction (X), and a vertical direction (Z) running perpendicular to the longitudinal direction (X) and the transverse direction (Y), the crash management system (100) comprising a crossbeam (10) extending essentially in the transverse direction (Y), the crossbeam (10) being configured to be attached to a vehicle structure by means of two crash boxes (12), which are disposed at a distance (a) from each other, and an attachment adapter (25; 25a; 25b) for attaching the crossbeam (10) to the crash box (12), the attachment adapter (25; 25a; 25b) being associated with one crash box (12) and the crossbeam (10) and connected to the crash box (12),
**characterized in that**
the attachment adapter (25; 25a; 25b) is an extruded component, and the crossbeam (10) projects over the cross section of the crash box (12) on one side on an end face (28) of the crash box (12) facing the crossbeam (10) in the vertical direction (Z),
and wherein the attachment adapter (25; 25a; 25b) has an extrusion direction extending in the transverse direction (Y) and wherein the crossbeam (10) projects over the two attachment adapters (25; 25a; 25b) in the transverse direction (Y) on opposite sides of the two attachment adapters (25; 25a; 25b) facing away from each other.

2. The crash management system according to claim 1,
**characterized in that**
the attachment adapter (25; 25a; 25b) has exactly one first stop area (30; 30a; 30b) on the side facing away from the crash box (12), the first stop area (30; 30a; 30b) at least partially covering the crossbeam (10) in the longitudinal direction (X), the crossbeam (10) being in contact with the first stop area (30; 30a; 30b) in the vertical direction (Z).

3. The crash management system according to claim 2,
**characterized in that**
in cross section, the first stop area (30; 30a) has at least one chamber (32; 32a, 35) having a closed cross section.

4. The crash management system according to any one of claims 1 to 3,
**characterized in that**
the attachment adapter (25; 25a; 25b) has an adapter plate (26; 26a) which is in contact with the end face (28) of the crash box (12), the adapter plate (26; 26a) protruding over the cross section of the crash box (12) in the vertical direction (Z) on both sides.

5. The crash management system according to any one of claims 1 to 4,
**characterized in that**
the attachment adapter (25a; 25b) has exactly one second stop area (36; 36b) on the side facing the crash box (12), the second stop area (36; 36b) being in contact with the crash box (12) in the vertical direction (Z).

6. The crash management system according to claim 5,
**characterized in that**
the second stop area (36) has at least one chamber (38).

7. The crash management system according to any one of claims 1 to 6,
**characterized in that**
the attachment adapter (25; 25a; 25b) laterally projects over the cross section of the crash box (12) on at least one side, preferably on both sides, when viewed in the transverse direction (Y).

8. The crash management system according to any one of claims 1 to 7,
**characterized in that**
the attachment adapter (25; 25a; 25b), the crossbeam (10), and the crash boxes (12) are made of aluminum or an aluminum alloy and that the attachment adapter (25; 25a; 25b), the crossbeam (10), and the crash boxes (12) are connected to each other via a welded connection (40).

9. The crash management system according to claim 8,
**characterized in that**
the welded connection (40) has first welds (41), which run in the transverse direction (Y).

10. The crash management system according to claim 8 or 9,
**characterized in that**
the welded connection (40) has second welds (42), which run in the longitudinal direction (X).

11. The crash management system according to any one of claims 8 to 10,
**characterized in that**
the welded connection (40) has third welds (43), which run in the vertical direction (Z).

12. The crash management system according to any one of claims 1 to 11,
**characterized in that**
the crossbeam (10) is an extruded component.

## Patentansprüche

1. Crashmanagementsystem (100) für einen vorderen oder hinteren Bereich eines Kraftfahrzeugs, das eine Längsrichtung (X), eine Querrichtung (Y), die quer zu der Längsrichtung (X) verläuft, und eine vertikale Richtung (Z) aufweist, die senkrecht zu der Längsrichtung (X) und zu der Querrichtung (Y) verläuft, wobei das Crashmanagementsystem (100) einen sich im Wesentlichen in der Querrichtung (Y) erstreckenden Querträger (10) umfasst, wobei der Querträger (10) so eingerichtet ist, dass er mittels zweier Crashboxen (12), die in einem Abstand (a) voneinander angeordnet sind, und eines Befestigungsadapters (25; 25a; 25b) zum Befestigen des Querträgers (10) an der Crashbox (12) befestigt wird, wobei der Befestigungsadapter (25; 25a; 25b) einer Crashbox (12) zugeordnet ist und der Querträger (10) mit der Crashbox (12) verbunden ist,
**dadurch gekennzeichnet, dass**
der Befestigungsadapter (25; 25a; 25b) ein extrudiertes Bauteil ist, und der Querträger (10) über den Querschnitt der Crashbox (12) einseitig an einer dem Querträger (10) zugewandten Stirnfläche (28) der Crashbox (12) in der vertikalen Richtung (Z) übersteht,
und wobei der Befestigungsadapter (25; 25a; 25b) eine Extrusionsrichtung aufweist, die sich in Querrichtung (Y) erstreckt, und wobei der Querträger (10) in Querrichtung (Y) über die beiden Befestigungsadapter (25; 25a; 25b) auf gegenüberliegenden Seiten der beiden voneinander abgewandten Befestigungsadapter (25; 25a; 25b) übersteht.

2. Crashmanagementsystem nach Anspruch 1,
**dadurch gekennzeichnet, dass**
der Befestigungsadapter (25; 25a; 25b) auf der von der Crashbox (12) abgewandten Seite genau einen ersten Anschlagbereich (30; 30a; 30b) aufweist, wobei der erste Anschlagbereich (30; 30a; 30b) den Querträger (10) in Längsrichtung (X) mindestens teilweise abdeckt und der Querträger (10) in vertikaler Richtung (Z) den ersten Anschlagbereich (30; 30a; 30b) berührt.

3. Crashmanagementsystem nach Anspruch 2,
**dadurch gekennzeichnet, dass**
der erste Anschlagbereich (30; 30a) in dem Querschnitt mindestens eine Kammer (32; 32a, 35) mit einem geschlossenen Querschnitt aufweist.

4. Crashmanagementsystem nach einem der Ansprüche 1 bis 3,
**dadurch gekennzeichnet, dass**
der Befestigungsadapter (25; 25a; 25b) eine Adapterplatte (26; 26a) aufweist, die die Stirnseite (28) der Crashbox (12) berüht, wobei die Adapterplatte (26; 26a) beidseitig in vertikaler Richtung (Z) über den Querschnitt der Crashbox (12) hinausragt.

5. Crashmanagementsystem nach einem der Ansprüche 1 bis 4,
**dadurch gekennzeichnet, dass**
der Befestigungsadapter (25a; 25b) genau einen zweiten Anschlagbereich (36; 36b) auf der der Crashbox (12) zugewandten Seite aufweist, wobei der zweite Anschlagbereich (36; 36b) in vertikaler Richtung (Z) die Crashbox (12) berührt.

6. Crashmanagementsystem nach Anspruch 5,
**dadurch gekennzeichnet, dass**
der zweite Anschlagbereich (36) mindestens eine Kammer (38) aufweist.

7. Crashmanagementsystem nach einem der Ansprüche 1 bis 6,
**dadurch gekennzeichnet, dass**
der Befestigungsadapter (25; 25a; 25b) in der Querrichtung (Y) betrachtet mindestens auf einer Seite, vorzugsweise auf beiden Seiten, seitlich über den Querschnitt der Crashbox (12) übersteht.

8. Crashmanagementsystem nach einem der Ansprüche 1 bis 7,
**dadurch gekennzeichnet, dass**
der Befestigungsadapter (25; 25a; 25b), der Querträger (10) und die Crashboxen (12) aus Aluminium oder einer Aluminiumlegierung bestehen und dass der Befestigungsadapter (25; 25a; 25b), der Querträger (10) und die Crashboxen (12) über eine Schweißverbindung (40) miteinander verbunden sind.

9. Crashmanagementsystem nach Anspruch 8,
**dadurch gekennzeichnet, dass**
die Schweißverbindung (40) erste Schweißnähte (41) aufweist, die in Querrichtung (Y) verlaufen.

10. Crashmanagementsystem nach Anspruch 8 oder 9,
**dadurch gekennzeichnet, dass**
die Schweißverbindung (40) zweite Schweißnähte (42) aufweist, die in Längsrichtung (X) verlaufen.

11. Crashmanagementsystem nach einem der Ansprüche 8 bis 10,
**dadurch gekennzeichnet, dass**
die Schweißverbindung (40) dritte Schweißnähte (43) aufweist, die in vertikaler Richtung (Z) verlaufen.

12. Crashmanagementsystem nach einem der Ansprüche 1 bis 11,
**dadurch gekennzeichnet, dass**
der Querträger (10) ein extrudiertes Bauteil ist.

## Revendications

1. Système d'absorption de choc (100) pour une zone avant ou arrière d'un véhicule à moteur présentant une direction longitudinale (X), une direction transversale (Y) perpendiculaire à la direction longitudinale (X), et une direction verticale (Z) perpendiculaire à la direction longitudinale (X) et à la direction transversale (Y), le système d'absorption de choc (100) comprenant une traverse (10) s'étendant sensiblement dans la direction transversale (Y), la traverse (10) étant configurée pour être fixée à une structure de véhicule au moyen de deux absorbeurs de chocs (12), qui sont disposées à une distance (a) l'une de l'autre, et un adaptateur de fixation (25 ; 25a ; 25b) pour fixer la traverse (10) à la boîte-tampon (12), l'adaptateur de fixation (25 ; 25a ; 25b) étant associé à un absorbeurs de choc (12) et à la traverse (10) et relié à l'absorbeur de choc (12),
**caractérisé en ce que**
l'adaptateur de fixation (25 ; 25a ; 25b) est une pièce extrudée, et la traverse (10) surplombe la section transversale de la boîte-tampon (12) d'un côté sur une face d'extrémité (28) de l'absorbeur de choc (12) orientée vers la traverse (10) dans la direction verticale (Z),
et dans lequel l'adaptateur de fixation (25 ; 25a ; 25b) présente une direction d'extrusion s'étendant dans la direction transversale (Y) et dans lequel la traverse (10) surplombe les deux adaptateurs de fixation (25 ; 25a ; 25b) dans la direction transversale (Y) sur des côtés opposés des deux adaptateurs de fixation (25 ; 25a ; 25b) orientés à l'opposé l'un de l'autre.

2. Système d'absorption de choc selon la revendication 1,
**caractérisé en ce que**
l'adaptateur de fixation (25 ; 25a ; 25b) présente exactement une première zone d'arrêt (30 ; 30a ; 30b) sur le côté orienté à l'opposé de l'absorbeur de choc (12), la première zone d'arrêt (30 ; 30a ; 30b) recouvrant au moins partiellement la traverse (10) dans la direction longitudinale (X), la traverse (10) étant en contact avec la première zone d'arrêt (30 ; 30a ; 30b) dans la direction verticale (Z).

3. Système d'absorption de choc selon la revendication 2,
**caractérisé en ce que**
en section transversale, la première zone d'arrêt (30 ; 30a) présente au moins une chambre (32 ; 32a, 35) présentant une section transversale fermée.

4. Système d'absorption de choc selon l'une quelconque des revendications 1 à 3, **caractérisé en ce que**
l'adaptateur de fixation (25 ; 25a ; 25b) présente une plaque d'adaptation (26 ; 26a) qui est en contact avec la face d'extrémité (28) de l'absorbeur de choc (12), la plaque d'adaptation (26 ; 26a) faisant saillie des deux côtés au-dessus de la section transversale de l'absorbeur de choc (12) dans la direction verticale (Z).

5. Système d'absorption de choc selon l'une quelconque des revendications 1 à 4, **caractérisé en ce que**
l'adaptateur de fixation (25a ; 25b) présente exactement une seconde zone d'arrêt (36 ; 36b) sur le côté orienté vers la boîte-tampon (12), la seconde zone d'arrêt (36 ; 36b) étant en contact avec l'absorbeur de choc (12) dans la direction verticale (Z).

6. Système d'absorption de choc selon la revendication 5,
**caractérisé en ce que**
la seconde zone d'arrêt (36) présente au moins une chambre (38).

7. Système d'absorption de choc selon l'une quelconque des revendications 1 à 6, **caractérisé en ce que**
l'adaptateur de fixation (25 ; 25a ; 25b) surplombe latéralement la section transversale de l'absorbeur de choc (12) sur au moins un côté, de préférence des deux côtés, lorsqu'il est vu dans la direction transversale (Y).

8. Système d'absorption de choc selon l'une quelconque des revendications 1 à 7, **caractérisé en ce que**
l'adaptateur de fixation (25 ; 25a ; 25b), la traverse (10) et les absorbeurs de chocs (12) sont en aluminium ou en alliage d'aluminium et **en ce que** l'adaptateur de fixation (25 ; 25a ; 25b), la traverse (10) et les boîtes-tampons (12) sont reliés entre eux par une liaison soudée (40).

9. Système d'absorption de choc selon la revendication 8,
**caractérisé en ce que**
la liaison soudée (40) présente des premières soudures (41), qui s'étendent dans la direction transversale (Y).

10. Système d'absorption de choc selon la revendication 8 ou 9,
**caractérisé en ce que**
la liaison soudée (40) présente des deuxièmes soudures (42), qui s'étendent dans la direction longitudinale (X).

11. Système d'absorption de choc selon l'une quelconque des revendications 8 à 10, **caractérisé en ce que**
la liaison soudée (40) présente des troisièmes soudures (43), qui s'étendent dans la direction verticale (Z).

12. Système d'absorption de choc selon l'une quelconque des revendications 1 à 11, **caractérisé en ce que**
la traverse (10) est une pièce extrudée.
